# EUROPEAN PATENT SPECIFICATION

(11) **EP 1 617 276 B1**
(45) Date of publication and mention of the grant of the patent: **20.06.2007**
(21) Application number: 05106122.4
(22) Date of filing: 06.07.2005
(51) Int. Cl.: G02C 5/22

(54) **Elastic hinge for spectacles and related assembly method**
Federscharnier für Brillen und entsprechendes Montageverfahren
Charnière élastique pour lunettes et méthode d'assemblage associée

(30) Priority: 15.07.2004 IT PN20040051
(43) Date of publication of application: 18.01.2006
(73) Proprietor: Makitech S.r.l., 32032 Feltre (Belluno) (IT)
(72) Inventor: ROSSI, Enrico, 32032, Feltre (Belluno) (IT); NANI, Domenico, 32031, Alano di Piave (Belluno) (IT)
(74) Representative: Giugni, Valter

(56) References cited:
- FR-A- 2 250 127
- US-A- 4 494 834
- US-A- 6 095 646
- US-A1- 2004 020 010

## Description

The present invention refers to an elastic hinge for spectacles comprising a box-like body adapted to accommodate at least an elastic member interacting with a hinge member, as well as the related assembly method.

Elastic hinges of the above-cited kind are widely known in the spectacles manufacturing industry. So, for instance, the patent application WO 97/41482 discloses an example of such kind of hinge comprising a box-like body, inside which there are mounted a pair of springs interacting at an extremity thereof with a wall of said box-like body and, at the other extremity thereof, with a T-shaped stem of a hinge member; such assembly formed by the springs, or anyway by similar elastically deformable means, and the hinge member shall hereinafter be referred to as the "elastic unit" or "elastic assembly". The box-like body housing such elastic assembly thereinside, and open at the surface thereof facing the sidepiece of the spectacles, is attached to the same sidepiece by a spot-welding or similar arc-welding process. Such a process enables the hinge to be fastened to the related sidepiece of the spectacles by only reaching up to the quite high temperatures required to cause the welding spots to melt in a very short time, and in a restricted area, thereby preventing the elastic properties and strength of the springs, which are already assembled in position within the box-like body, from being affected or impaired during the welding operation. On the other hand, this process calls for the use of tools that are not so widely used by spectacles manufacturers currently, unlike for instance soldering, brazing or induction welding tools, which are certainly more widespread in such industry, but generally involve processes that are not applicable to elastic hinges of the kind described in the above-mentioned patent application WO 97/41482, owing to the high temperatures that are reached for a considerably longer time and in considerably larger areas than those typical of spot welding applications. The manufacturing method for the production of spectacles frames provided with elastic hinges of the above-cited kind therefore turns out to be quite demanding and expensive, translating into a high price to be paid by the final buyer to purchase the resulting product.

Another major drawback connected with the use of elastic hinges of the kind described in said patent application WO 97/41482 derives from the fact that the box-like body is open at the face thereof that must be attached to the spectacles sidepiece. Now, spot welding does not allow for the box-like body itself to be tightly sealed all along the peripheral edges of the surface thereof which is facing the sidepiece, so that, during the subsequent electroplating or similar surface treatment process, liquid may seep therethrough into the box-like body and this liquid may then leak out again to the detriment of the surface finishing effect. The same problem is also encountered in the case of the elastic hinge being overinjected, or core-injected, so that molten plastic material may penetrate inside the box-like body, thereby impairing or jeopardizing - upon setting - the actual function of the elastic assembly itself.

The US patent No. 5,755,010 discloses a further example of an elastic hinge, in which the box-like body is obtained from constant-thickness bent sheet-metal. According to a first embodiment, such a box-like body is open both at the surface thereof that is going to face the sidepiece, and frontally in view of receiving a pre-assembled elastic assembly comprised of a hinge-member supporting a spring and a locking member; the latter closes the front opening by causing the elastic assembly to snap-fit into a locked position in the box-like body itself. The hinge is then fastened to the related sidepiece of the spectacles by a welding process, which may be either a spot-welding or an induction or braze welding process, to join the box-like body to the sidepiece of the spectacles, followed by the pre-assembled elastic assembly being snap-fitted into and locked in position within said box-like body.

A drawback of elastic hinges of the above-described kind is connected to the relatively thin walls of the box-like body being quite likely to warp, i.e. to become distorted, during the welding operation, especially during braze welding, owing to the very high temperature required to melt the brazing or weld alloy, as well as the mechanical pressure that is normally exerted in view of favouring the bond between the parts to be welded together.

In addition, owing to the shape of the box-like body, which is open at the surface thereof facing the sidepiece, a certain difficulty is generally encountered in correctly metering, i.e. delivering the brazing or weld material in an even, uniform manner all along the periphery of such an aperture. In fact, the risk is run that, in case of an improper metering of the brazing or weld alloy, a weld bead forms to reduce the internal volume of the box-like body, with the possibility for this to create an interference effect opposing the insertion of the pre-assembled elastic assembly by making such insertion difficult or even impossible to complete.

In a second embodiment, the sheet-metal used to form the box-like body is bent on the lower side thereof so as to form an essentially closed base having an aperture to enable the elastic assembly to be snap-fitted and locked therein. In this second embodiment, the method used to fasten the hinge to the sidepiece of the spectacles is preferably based on adhesive-bonding the box-like body - with the elastic assembly already snap-fitted and locked therein - to the sidepiece with the base thereof, since inserting and snap-locking the elastic assembly in position in the box-like body would be no longer allowed if the base is preliminarily bonded or welded to the sidepiece, owing to adhesive, braze or weld material seeping into the aperture provided for snap-locking the elastic assembly in position.

Furthermore, the adhesive-bonding method is preferred in consideration of the fact that the sharp temperature rise brought about by a welding operation would damage or, anyway, prove detrimental to the elastic assembly, in particular to the elasticity of the springs, which are already mounted in the box-like body when the latter is attached to the related sidepiece.

The bonding process itself, however, is not fully free of drawbacks, owing on the one side to the allergies or hypersensitization that may be caused or brought about in a user/operator by one or more of the substances which the adhesive or glue is made of, and, on the other side, the poor strength to shear and similar stresses of adhesives in general and the difficulties connected with dealing with and handling glues.

US 4,494,834 discloses a hinge for the pivoting of an elastically divertible temple piece to an eyeglass frame, including a rod-shaped slide which is slidably mounted in a seat provided in the end portion of the temple piece and which protrudes from the seat. A hole is formed in the slide which extends coaxially in the slide over a predetermined depth from its protruding end. A slot is formed in the slide which extends longitudinally in the slide over a predetermined length from its protruding end. A block is fastened transversely at the mouth of the seat, extends through the slot and constitutes an axial guide for the slide. A spring is mounted in the hole in the slide having an end in pressing contact with the block and another end in pressing contact with the bottom wall defining the hole.

FR 2250127, upon which the preamble of claims 1 and 8 are based, discloses an elastic hinge for eyeglasses which allows the extension of a temple piece beyond the abutment position such that it can elastically fit to the user's head; the elastic hinge is formed by two hinge members mutually pivoted and connected, respectively, to the temple piece and to the eyeglass frame. The hinge member of the temple piece is contained in a box-like body wherein a spring adapted to recover the temple piece from the extended position to the normal opened position is inserted. The box-like body is constituted by a shaped tube having four sidewalls and provided, on two opposite sidewalls, with longitudinal grooves for insertion of a guide element provided on the temple piece. A locking element is longitudinally inserted into the front portion of the box-like body and fixed by a screw, the spring abutting against said locking element.

A drawback that appears to be common to all of the above-described prior-art solutions lies in the fact that the elastic assembly of the hinge must be first pre-assembled and then mounted into the box-like body due to accommodate it; the latter may be either preliminarily welded on to the related sidepiece, as described in connection with the first embodiment in the US patent No. 5,755,010, or first completed with the elastic assembly and then bonded or welded, as described in connection with the second embodiment in the same US patent No. 5,755,010 or the embodiment disclosed in the afore-cited patent application WO 97/41482. This entails some difficulties that may be encountered when repairing a broken hinge, so that the same hinge, if not the whole spectacles frame, must generally be fully and simply replaced when a hinge fails or breaks down.

A further drawback encountered with the above-described prior-art solutions lies in the fact that, due to allergy prevention considerations, both the box-like body and the various friction elements, such as the cams of the hinge articulations on the spectacles frame, must be made of anallergic material, such as titanium; however, the friction due to two components made of such material sliding against each other is generally quite remarkable, so that it very quickly leads the contact surfaces of these components to wear down very quickly, so that they are no longer able to adequately perform their task of keeping the sidepieces of the spectacles stably arrested in their open or closed position.

It therefore is an object of the present invention to do away with the drawbacks of prior-art solutions as indicated above by providing an elastic hinge for spectacles that enables the components of the elastic assembly to be assembled in a simplified manner within the box-like body intended for the accommodation thereof.

Within the above general object, another important purpose of the present invention is to provide an elastic hinge for spectacles, which is capable of being attached to the related sidepiece of the spectacles with the use of processes and tools that are largely available to spectacles manufacturers or easily accessible to repairers.

A further purpose of the present invention is to provide an elastic hinge for spectacles of the above-indicated kind, which is capable of being attached to the related sidepiece of the spectacles without this causing component parts to suffer any distortion, warpage or deterioration during the attachment process.

Still another purpose of the present invention is to provide an elastic hinge for spectacles of the above-cited kind, which allows for the same hinge to be easily and quickly repaired in the case that a component part thereof breaks down or does not work regularly any longer due to wear and tear.

A further purpose yet of the present invention is to provide an elastic hinge for spectacles of the above-cited kind, which is hermetically sealed against any liquid or molten material being capable of penetrating or seeping thereinto during the subsequent treatments or processes, such as electroplating or over-injection, thereby safeguarding and preserving the functionality of the elastic assembly contained inside the box-like body at an optimum level.

Yet another purpose of the present invention is to provide an elastic hinge for spectacles of the above-cited kind, the component parts of which are not subject to rapid wear, while at the same time ensuring the necessary compliance to the requirements calling for spectacle materials to be fully anallergic.

Finally, an equally important purpose of the present invention is to provide an elastic hinge for spectacles of the above-cited kind, which is capable of being easily manufactured at reasonably low costs with the use of readily available, largely known tools, materials and component parts.

According to the present invention, these aims, along with further ones that will be apparent in the following description, are reached in an elastic hinge for spectacles, which is as defined and recited in the appended claim 1.

Defined in the following sub-claims are further features and advantages of the elastic hinge according to the present invention, which will anyway be more readily understood from the description of a particular, although not sole embodiment thereof that is given below by way of non-limiting example with reference to the accompanying drawings, in which:

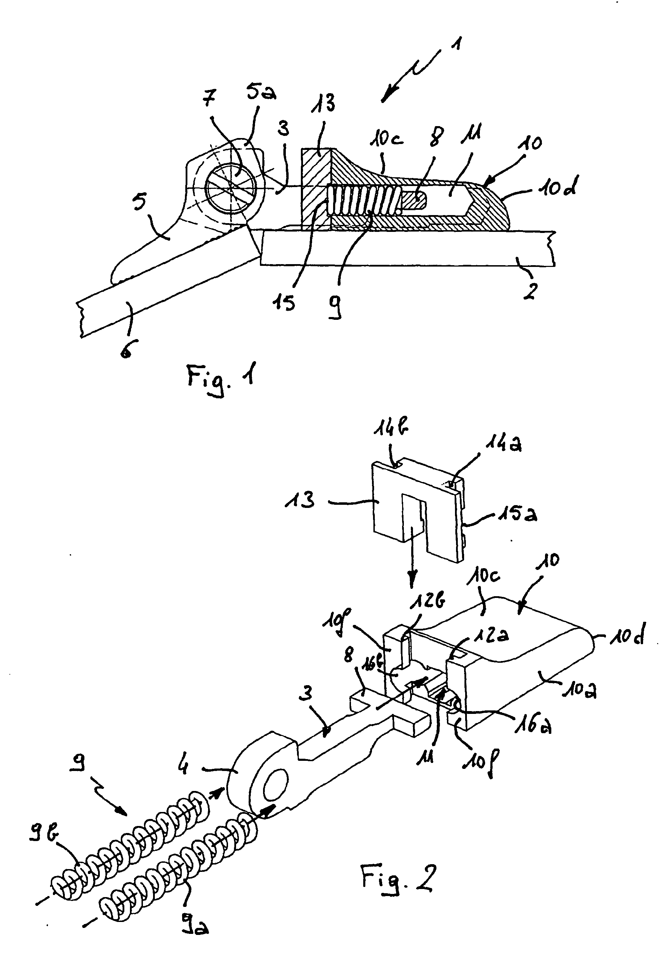

- Figure 1 is a partially cross-sectional, plan view of a detail of a spectacles frame comprising an elastic hinge according to the present invention;
- Figure 2 is a perspective exploded view of the elastic hinge according to the present invention;
- Figure 3 is a partially cross-sectional, perspective view of the assembly of the elastic hinge shown in Figure 2;
- Figure 4 is a perspective rear view of a first component part of the elastic hinge shown in Figure 2;
- Figure 5 is a perspective bottom view of a second component part of the elastic hinge shown in Figure 2.

With reference to the above-indicated Figures, an elastic hinge according to the present invention, as generally indicated at 1, is illustrated in the state in which it is attached to a related spectacles sidepiece 2. The elastic hinge 1 comprises a hinge member 3 provided at an extremity thereof with an eyelet 4 engaging in an articulated manner a bracket 5 that is firmly joined or integral with the spectacles frame 6. The pivotally articulated joint between the hinge member 3 and the bracket 5 is provided - in a manner known as such in the art - by a pin or screw 7. Advantageously, the bracket 5 is provided with a cam 5a for arresting in a stable manner the sidepiece 2 in the position thereof in which it is opened out or folded relative to the spectacles frame 6.

The hinge member 3 is provided, at the opposite extremity thereof, i.e. at the extremity that does not carry the afore-cited eyelet 4, with a preferably T-shaped or cap-shaped head 8 for elastically deformable means 9, as preferably constituted by a pair of springs 9a, 9b, to abut or rest theregainst.

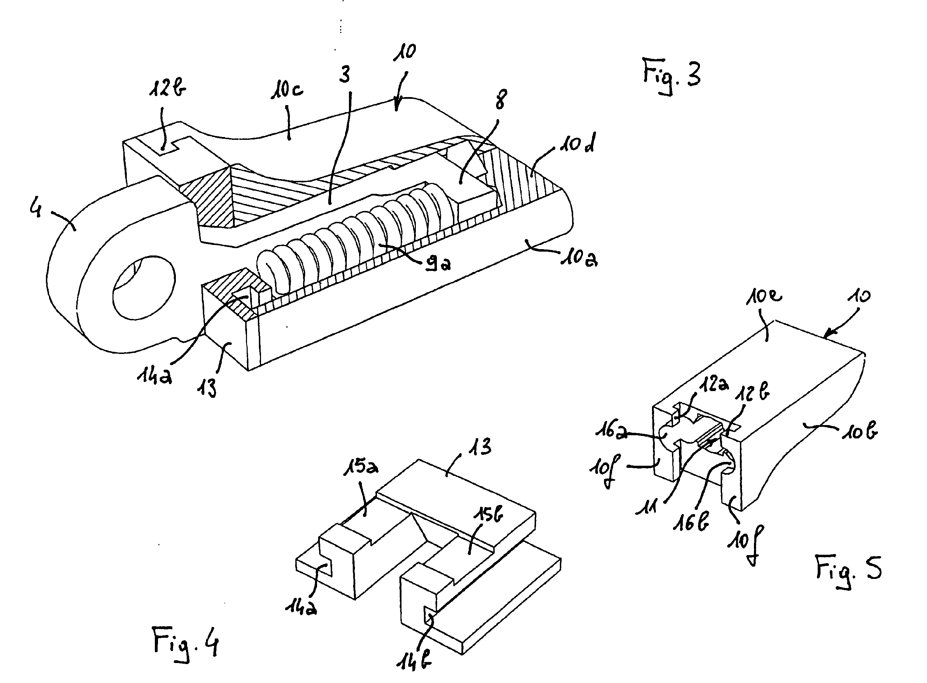

The elastic hinge 1 further comprises a box-like body 10 provided with a cavity 11 adapted to receive and accommodate the hinge member 3 and the springs 9a, 9b, as best illustrated in Figure 3.

The box-like body 10 is comprised of a structure that is substantially closed, i.e. sealed, except for a front aperture provided for acceding into the cavity 11; it therefore includes a pair of side walls 10a, 10b, a top wall 10c, a bottom wall 10d, upon which the head 8 of the hinge member 3 rests when not subjected to tensile load, as well as a lower wall 10e lying on the face intended for association to the spectacles sidepiece. The box-like body 10 further comprises a front wall 10f provided with the front access aperture to the cavity 11, at the sides of which there are provided guide means, as constituted for example by two side tangs 12a, 12b.

A slide-type locking member 13, provided with a pair of side grooves 14a, 14b having a shape that is complementary to the shape of said tangs 12a, 12b, closes the cavity 11 of the box-like body 10 upon the hinge member 3 and the elastically deformable means 9, as constituted preferably by the springs 9a, 9b, having been duly accommodated, i.e. mounted in the cavity 11. To this purpose, the slide-like locking member 13 is provided with at least an abutment surface 15 for the elastically deformable means 9; in the embodiment illustrated in the accompanying Figures, the locking member 13 is provided with a first and a second abutment surface 15a, 15b, preferably in a low-profile or recessed configuration, for the springs 9a, 9b, respectively. These recessed surfaces act as a safety provision against the locking member 13 being capable of opening accidentally, since, for this member to be able to slide upwards, it must overcome the load applied by the springs 9a, 9b onto the step formed by the respective recessed surface.

In an advantageous manner, on the front wall 10f and in the cavity 11 there are provided two essentially cylindrical side accommodations 16a, 16b adapted to facilitate the respective springs 9a, 9b being received therein.

The procedure for assembling the elastic hinge according to the present invention is as follows: the box-like body 10 is attached to the spectacles sidepiece 2 with the aid of a welding process of a generally known kind, such as spot welding, induction welding, brazing, soldering or the like, depending on the material which the box-like body is made of. An attachment of the box-like body to the related sidepiece by braze welding appears to be particularly expedient, since this welding process is the most widespread one among spectacles manufacturers, actually. Once the box-like body 10 has been attached in this way to the related sidepiece 2, in the cavity 11 there are inserted the hinge member 3, in such a manner as to cause it to abut against the bottom wall 10d, and the elastically deformable means 9, as preferably constituted by the springs 9a, 9b arranged so as to abut against the head 8 to elastically retain the hinge member 3 inside the cavity 11. To lock the so obtained assembly in place, the locking member 13 is inserted in a sliding manner, in correspondence to the grooves 14a, 14b, along the tangs 12a, 12b of the front wall 10f of the box-like body 10, so that the springs 9a, 9b are locked by the abutment surfaces 15a, 15b of the locking member 13. Subsequently, the sidepiece 2 with the elastic hinge 1 may be pivotally mounted on the bracket 5 of the spectacles frame 6 by means of the related pin or screw 7.

As can be readily appreciated from the above disclosure, the elastic hinge according to the present invention fully reaches the aims and advantages as set forth hereinbefore, by allowing for a simplified assembly of the component parts forming the elastic assembly, i.e. the hinge member 3 and the elastically deformable means 9, inside the box-like body 10 intended to accommodate them. It also makes it fully possible and feasible for the box-like body 10 to be preliminarily attached to the spectacles sidepiece 2 without it being necessary for all component parts of the elastic hinge to be pre-assembled prior to such attachment. This advantage derives from the fact that the box-like body basically has a sealed structure, even in correspondence to the lower surface 10e thereof, so that it can be freely and dependently attached to the related sidepiece 2, and that the so-called elastic assembly, as composed by the hinge member 3 and the elastically deformable means 9, is inserted in the cavity 11 axially, while the locking member 13 is guided vertically along the tangs 12a, 12b, locking said elastic assembly in place.

This feature also enables a greater safety to be ensured against the assembly being capable of opening up accidentally, since the insertion of the locking member 13 in a direction that is perpendicular, rather than parallel, as occurs in prior-art solutions, to the axial force exerted by the elastically deformable means 9 causes the friction between the locking member 13 and the guide tangs 12a, 12b to be increased, thereby reducing the possibility for the same locking member 13 to slip or slide open accidentally. This safety effect is further enhanced by the possible provision of recessed abutment surfaces 15a, 15b, against which the elastically deformable means 9, in particular the springs 9a, 9b, are caused to rest.

Another advantage of the elastic hinge according to the present invention lies in the fluid-tight construction of the same hinge, due to the box-like body thereof having a fully closed and sealed structure. As the spectacles undergo the various treatments and processes following the attachment of the hinge to the sidepiece, such as for instance electroplating, over-injection or the like, no liquid or molten plastic material will therefore be able to penetrate or seep into the box-like body to impair the result of the treatment or process itself or the functionality of the hinge.

In addition, the elastic hinge according to the present invention enables a spectacles manufacturer to select the most befitting process for attaching the hinge to the sidepiece 2, as a function of both the material used to make the box-like body 10 and the necessary tools and equipment being readily available to the manufacturer and/or the repairer. In particular, use can be made here of the braze welding process, i.e. a process having the tools and equipment required to carry it out largely available and widespread among spectacles manufacturers, since the particular structure of the hinge according to the present invention enables the box-like body 10 to be welded on to the sidepiece 2 and the hinge member 3 and the springs 9a, 9b to be mounted in said body only after such welding has been done, so that the functionality of said component parts is not affected or impaired by the rather severe heating connected to the welding or, in particular, braze welding process itself.

A further advantage of the elastic hinge according to the present invention derives from the fact that component parts undergoing friction during the use of the spectacles are subject to a considerably smaller extent of wear, notwithstanding the use of anallergic materials such as titanium: this advantage is obtained through the interposition - between the front portion of the box-like body 10 and the cam 5a of the bracket 5 - of the locking member 13, which can be made of plastics or, anyway a material having a lower coefficient of friction than titanium. This is made possible by the really small size of said component part, which therefore is scarcely influential, i.e. of little impact, as far as allergic effects on the user are concerned.

Finally, it can be readily appreciated that the elastic hinge according to the present invention allows for any of its component parts to be more conveniently and quickly repaired in the case of a breakdown or failure thereof, since it can most easily be disassembled and re-assembled without any special tools or equipment being required to do this, actually.

It will anyhow be also appreciated that the elastic hinge according to the present invention, so as described and illustrated above, may be subject to a number of modifications and be embodied in a number of different manners without departing from the scope of the claims. Furthermore, the materials used for the various component parts of the inventive hinge, as well as the shapes and the sizing thereof, may of course be each time so selected as to more appropriately fit the particular applications and requirements.

## Claims

1. Elastic hinge for spectacles comprising a box-like body (10) attachable to a sidepiece (2) of the spectacles and having a cavity (11) adapted to accommodate a hinge member (3) and elastically deformable means (9, 9a, 9b), said hinge member (3) abutting against said elastically deformable means (9, 9a, 9b), said box-like body (10) comprising a closed lower wall (10e) for attachment to said sidepiece (2) and a front wall (10f) having a front aperture for access into said cavity (11), said elastic hinge further comprising a locking member (13) adapted to retain said hinge member (3) and said elastically deformable means (9, 9a, 9b) within said cavity (11), said front wall (10f) being provided with guide means (12a, 12b), said locking member (13) being adapted to engagingly mate with said guide means (12a, 12b) so as to be slidably and removably insertable along said guide means (12a, 12b), **characterized in that** said locking member (13) is provided with grooves (14a, 14b) adapted to engagingly mate with said guide means (12a, 12b), said locking member (13) being slidably and removably insertable, in correspondence to said grooves (14a, 14b), along said guide means (12a, 12b) in a direction that is perpendicular to the axial direction of said elastically deformable means (9, 9a, 9b).

2. Elastic hinge according to claim 1, wherein said box-like body (10) is comprised of a structure that is substantially sealedly closed, except for said front aperture allowing access into said cavity (11).

3. Elastic hinge according to any of the preceding claims, wherein said locking member (13) is adapted to sealedly close said front aperture, thereby retaining said hinge member (3) and said elastically deformable means (9, 9a, 9b) within said cavity (11).

4. Elastic hinge according to any of the preceding claims, wherein said guide means (12a, 12b) are provided on said front wall (10f) at the sides of said front aperture.

5. Elastic hinge according to any of the preceding claims, wherein said hinge member (3) is provided, at the end accommodated within said cavity (11), with an abutment head (8) abutting against said elastically deformable means (9, 9a, 9b).

6. Elastic hinge according to any of the preceding claims, wherein said locking member (13) is provided with at least an abutment surface (15, 15a, 15b) for said elastically deformable means (9, 9a, 9b) to rest thereagainst.

7. Elastic hinge according to any of the preceding claims, wherein said elastically deformable means (9, 9a, 9b) are comprised of a pair of springs (9a, 9b) adapted to be received into respective essentially cylindrical side accommodations (16a, 16b) provided in said front wall (10f) and said cavity (11).

8. Method for assembling an elastic hinge for spectacles according to any of the preceding claims, comprising the step of attaching a hollow box-like body (10) including a front wall (10f) to a sidepiece (2) of the spectacles, preferably by a braze welding operation, comprising the steps of :
a. separately accommodating a hinge member (3) and elastically deformable means (9, 9a, 9b) within said hollow box-like body (10);
b. locking the assembly formed by said hinge member (3) and said elastically deformable means (9, 9a, 9b) in place by means of a locking member (13) adapted to be removably inserted in a sliding manner along respective guide means (12a, 12b) provided on said front wall (10f),
**characterized in that** in step b said locking member (13) is inserted in a sliding manner along said guide means (12a, 12b) in a direction that is substantially perpendicular to the longitudinal axis of said elastically deformable means (9, 9a, 9b).

## Patentansprüche

1. Elastisches Scharnier für eine Brille, aufweisend einen kastenartigen Körper (10), der an einem Seitenteil (2) der Brille befestigbar ist und einen Hohlraum (11), der ausgebildet ist, um ein Scharnierelement (3) und elastisch verformbare Einrichtungen (9,9a, 9b) aufzunehmen, wobei das Scharnierelement (3) gegen die elastisch verformbare Einrichtungen (9, 9a, 9b) ansteht, und der kastenartige Körper (10) eine geschlossene untere Wand (10e) zur Befestigung an dem Seitenteil (2) und eine vordere Wand (10f) aufweist, die eine vordere Öffnung zum Zugang in den Hohlraum (11) aufweist, wobei das elastische Scharnier weiter ein Verriegelungselement (13) aufweist, das ausgebildet ist, um das Scharnierelement (3) und die elastisch verformbare Einrichtungen (9, 9a, 9b) in dem Hohlraum (11) zurückzuhalten, wobei die vordere Wand (10f) mit einer Führungseinrichtung (12a, 12b) versehen ist, und das Verriegelungselement (13) ausgebildet ist, um mit der Führungseinrichtung (12a, 12b) in Eingriff zu kommen, so dass es gleitend verschieblich und wieder entfernbar entlang der Führungseinrichtung (12a, 12b) eingeführt werden kann, **dadurch gekennzeichnet, dass** das Verriegelungselement (13) mit Nuten (14a, 14b) versehen ist, die ausgebildet sind, um mit der Führungseinrichtung (12a, 12b) ineinandergreifend in Eingriff zu kommen, wobei das Verriegelungselement (13), in Übereinstimmung mit den Nuten (14a, 14b), entlang der Führungseinrichtung (12a, 12b) in einer Richtung, die senkrecht zur Axialrichtung der elastisch verformbaren Einrichtungen (9, 9a, 9b) ist, gleitend verschieblich und wieder entfernbar eingeführt werden kann.

2. Elastisches Scharnier nach Anspruch 1, bei dem der kastenartige Körper (10) aus einer Struktur besteht, die im Wesentlichen dicht abgeschlossen ist, abgesehen von der vorderen Öffnung, die einen Zugang in den Hohlraum (11) ermöglicht.

3. Elastisches Scharnier nach einem der vorhergehenden Ansprüche, bei dem das Verriegelungselement (13) so ausgebildet ist, dass es die vordere Öffnung dicht verschließt, wodurch das Scharnierelement (3) und die elastisch verformbare Einrichtungen (9, 9a, 9b) in dem Hohlraum (11) zurückgehalten werden.

4. Elastisches Scharnier nach einem der vorhergehenden Ansprüche, bei dem die Führungseinrichtungen (12a, 12b) an den Seiten der vorderen Öffnung an der vorderen Wand (10f) vorgesehen sind.

5. Elastisches Scharnier nach einem der vorhergehenden Ansprüche, bei dem das Scharnierelement (3) an seinem im Hohlraum (11) untergebrachten Ende mit einem Widerlagerkopf (8) versehen ist, der gegen die elastisch verformbaren Einrichtungen (9, 9a, 9b) ansteht.

6. Elastisches Scharnier nach einem der vorhergehenden Ansprüche, bei dem das Verriegelungselement (13) mit mindestens einer Widerlagerfläche (15, 15a, 13b) versehen ist, auf der die elastisch verformbaren Einrichtungen (9, 9a, 9b) ruhen können.

7. Elastisches Scharnier nach einem der vorhergehenden Ansprüche, bei dem die elastisch verformbaren Einrichtungen (9, 9a, 9b) aus einem Paar von Federn (9a, 9b) bestehen, die ausgebildet sind, um in jeweiligen in Wesentlichen zylindrischen Seitenaufnahmen (16a, 16b) aufgenommen zu werden, die in der vorderen Wand (10f) des Hohlraums (11) vorgesehen sind.

8. Verfahren zum Montieren eines elastischen Scharniers für eine Brille gemäß einem der vorhergehenden Ansprüche, welches den Schritt aufweist, dass ein hohler kastenartiger Körper (10), der eine vordere Wand (10f) beinhaltet, an einem Seitenteil (2) der Brille befestigt wird, und zwar vorzugsweise mittels einer Schweißlötoperation, wobei es die folgenden Schritte umfasst:
a) separates Unterbringen eines Scharnierelementes (3) und elastisch verformbarer Einrichtungen (9, 9a, 9b) in dem hohlen kastenartigen Körper (10);
b) Verriegeln der Baugruppe, die aus dem Scharnierelement (3) und den elastisch verformbaren Einrichtungen (9, 9a, 9b) gebildet ist, an ihrem Ort mittels eines Verriegelungselementes (13), das so ausgebildet ist, dass es entlang jeweiligen an der vorderen Wand (10f) vorgesehenen Führungseinrichtungen (12a, 12b) in gleitend verschieblicher Weise und wieder entfernbar einzuführen ist, **dadurch gekennzeichnet, dass** in Schritt b) das Verriegelungselement (13) in gleitend verschieblicher Weise entlang den Führungseinrichtungen (12a, 12b) in einer Richtung eingeführt wird, die im Wesentlichen senkrecht zur Längsachse der elastisch verformbaren Einrichtungen (9, 9a, 9b) ist,

## Revendications

1. Charnière élastique pour lunettes comprenant un corps de type boîte (10) pouvant être fixé à une branche (2) des lunettes et ayant une cavité (11) adaptée pour loger un élément de charnière (3) et des moyens élastiquement déformables (9, 9a, 9b), ledit élément de charnière (3) étant en butée contre lesdits moyens élastiquement déformables (9, 9a, 9b), ledit corps de type boîte (10) comprenant une paroi de fond fermée (10e) pour la fixation à ladite branche (2) et une paroi avant (10f) ayant une ouverture avant pour l'accès dans ladite cavité (11), ladite charnières élastique comprenant en outre un élément de verrouillage (13) adapté pour retenir ledit élément de charnière (3) et lesdits moyens élastiquement déformables (9, 9a, 9b) à l'intérieur de ladite cavité (11), ladite paroi avant (10f) étant équipée de moyens de guidage (12a, 12b), ledit élément de verrouillage (13) étant adapté pour s'accoupler de manière à s'engager avec lesdits moyens de guidage (12a, 12b) de sorte à être insérable de manière à pouvoir glisser et à être amovible le long desdits moyens de guidage (12a, 12b), **caractérisé en ce que** ledit élément de verrouillage (13) est équipé de rainures (14a, 14b) adaptées pour s'accoupler de manière à s'engager avec lesdits moyens de guidage (12a, 12b), ledit élément de verrouillage (13) étant insérable de manière à pouvoir glisser et à être amovible, en correspondance avec lesdites rainures (14a, 14b), le long desdits moyens de guidage (12a, 12b) dans une direction qui est perpendiculaire à la direction axiale desdits moyens élastiquement déformables (9, 9a, 9b).

2. Charnière élastique selon la revendication 1, dans laquelle ledit corps de type boîte (10) comprend une structure qui est substantiellement hermétiquement fermée, à l'exception de ladite ouverture avant permettant l'accès dans ladite cavité (11).

3. Charnière élastique selon l'une quelconque des revendications précédantes, dans laquelle ledit élément de verrouillage (13) est adapté pour fermer hermétiquement ladite ouverture avant, en retenant ainsi ledit élément de charnière (3) et lesdits moyens élastiquement déformables (9, 9a, 9b) à l'intérieur de ladite cavité (11).

4. Charnière élastique selon l'une quelconque des revendications précédantes, dans laquelle lesdits moyens de guidage (12a, 12b) sont disposés sur ladite paroi avant (10f) sur les côtés de ladite ouverture avant.

5. Charnière élastique selon l'une quelconque des revendications précédentes, dans laquelle ledit élément de charnière (3) est équipé, à l'extrémité logée à l'intérieur de ladite cavité (11), d'une tête de butée (8) étant en butée contre lesdits moyens élastiquement déformables (9, 9a, 9b).

6. Charnière élastique selon l'une quelconque des revendications précédantes, dans laquelle ledit élément de verrouillage (13) est équipé d'au moins une surface de butée (15, 15a, 15b) prévue pour que lesdits moyens élastiquement déformables (9, 9a, 9b) reposent contre celle-ci.

7. Charnière élastique selon l'une quelconque des revendications précédantes, dans laquelle lesdits moyens élastiquement déformables (9, 9a, 9b) comprennent une paire de ressorts (9a, 9b) adaptés pour être reçus respectivement dans des logements latéraux essentiellement cylindriques (16a, 16b) fournis dans ladite paroi avant (10f) et ladite cavité (11).

8. Méthode d'assemblage d'une charnière élastique pour lunettes selon l'une quelconque des revendications précédantes, comprenant l'étape de fixation d'un corps creux de type boîte (10) Incluant une paroi avant (10f) à une branche (2) des lunettes, de préférence par une opération de soudobrasage, comprenant les étapes consistant à:
a. loger séparément un élément de charnière (3) et des moyens élastiquement déformables (9, 9a, 9b) à l'intérieur dudit corps creux de type botte (10);
b. verrouiller en place l'assemblage formé dudit élément de charnière (3) et desdits moyens élastiquement déformables (9, 9a, 9b) au moyen d'un élément de verrouillage (13) adapté pour être Inséré de manière à être amovible et de manière à glisser le long des moyens de guidage respectifs (12a, 12b) disposés sur ladite paroi avant (10f), **caractérisée en ce que** lors de l'étape b, ledit élément de verrouillage (13) est inséré de manière à glisser le long desdits moyens de guidage (12a, 12b) dans une direction qui est substantiellement perpendiculaire à l'axe longitudinal desdits moyens élastiquement déformables (9, 9a, 9b).
